# FASCICULE DE BREVET EUROPEEN

(11) **EP 2 924 837 B1**
(45) Date de publication et mention de la délivrance du brevet: **01.05.2019**
(21) Numéro de dépôt: 15160614.2
(22) Date de dépôt: 24.03.2015
(51) Int. Cl.: H02H 3/04, H02H 1/00, H02H 1/06

(54) **DISPOSITIF DE GESTION DES CAUSES DE DÉCLENCHEMENT DANS UN DÉCLENCHEUR ÉLECTRONIQUE**
VORRICHTUNG ZUR VERWALTUNG DER AUSLÖSEURSACHEN IN EINEM ELEKTRONISCHEN AUSLÖSER
TRIP CAUSE MANAGEMENT DEVICE FOR AN ELECTRIC TRIP DEVICE

(30) Priorité: 24.03.2014 FR 1400710
(43) Date de publication de la demande: 30.09.2015
(73) Titulaire: Schneider Electric Industries SAS, 92500 Rueil-Malmaison (FR)
(72) Inventeur: Masseboeuf, Bertrand, 38140 Beaucroissant (FR); Sorin, Joel, 38420 Domène (FR)
(74) Mandataire: Talbot, Alexandre

(56) Documents cités:
- WO-A2-2008/054806
- US-A- 5 311 392
- US-A- 5 335 135
- US-A1- 2002 085 326

## Description

### Domaine technique de l'invention

L'invention est relative à un dispositif de gestion des causes de déclenchement dans un disjoncteur.

### État de la technique

Après le déclenchement d'un disjoncteur électronique, il est important de conserver l'information concernant la cause du déclenchement. Il est également important de conserver quelques informations sur les événements qui sont intervenus juste avant le déclenchement.

De manière traditionnelle, l'information relative à la cause du déclenchement se fait au moyen d'un microprocesseur qui sauvegarde cette information sur des dispositifs mémoire. Le microprocesseur intervient également dans la sauvegarde des informations concernant les grandeurs électriques avant et au moment du déclenchement. Le microprocesseur est fortement sollicité pendant la sauvegarde des informations ce qui nécessite l'utilisation d'un microprocesseur de taille importante.

Il existe plusieurs documents qui adressent cette problématique. A titre d'exemple, le document EP0279692 décrit un interrupteur de circuit avec un indicateur de défaut. Les informations provenant de l'état de l'alimentation surveillée juste avant le défaut sont sauvegardées par un seul microprocesseur.

Par soucis de simplicité, le disjoncteur est alimenté directement par la ligne à surveiller. Dans cette configuration, lorsque le déclenchement intervient, le disjoncteur n'est plus alimenté.

Le document US5089928 décrit un disjoncteur, utilisant un micro-ordinateur pour la surveillance d'un circuit et pour la sauvegarde des données relatives au circuit surveillé.

Le document US5311392 divulgue un disjoncteur, équipé de deux processeurs pour surveiller un circuit d'alimentation. Les processeurs sont alimentés de manière indépendante, de sorte qu'un deuxième processeur fonctionne également quand l'alimentation du premier processeur est coupée. Le premier processeur a accès à plus d'informations que le deuxième processeur.

Le document US5224011 divulgue un système, où une batterie est utilisée pour assurer la sauvegarde des informations dans un circuit électrique, en cas de perte d'alimentation principale.

Le document US5335135 divulgue un disjoncteur muni de deux microcontrôleurs. L'un des microcontrôleurs est alimenté par une source d'alimentation secondaire de type 15V DC. L'autre microcontrôleur est alimenté à partir des lignes d'alimentation à suivre.

Le document US2002/0085326 décrit un disjoncteur muni de nombreuses fonctionnalités. Le dispositif comporte plusieurs détecteurs qui travaillent séparément et indépendamment pour fournir des informations à un microprocesseur.

Le document WO2008/054806 divulgue un disjoncteur configuré pour détecter les arcs électriques sur une ligne d'alimentation. Le dispositif comporte différents circuits électroniques configurés pour tester, mesurer ou calculer des caractéristiques électriques particulières. Le document reste vague sur la manière d'alimenter tes microcontrôleurs.

### Objet de l'invention

On constate qu'il existe un besoin de fournir un disjoncteur fournissant des informations sur les causes de déclenchement de manière plus efficace et plus fiable.

Ce but est atteint par un disjoncteur comportant :
- une série d'entrées connectées à un premier microcontrôleur configuré pour mesurer des caractéristiques d'un courant électrique d'une ligne d'alimentation pour détecter un défaut électrique de la ligne d'alimentation,
- un deuxième microcontrôleur alimenté par ladite ligne d'alimentation et présentant une première valeur de consommation électrique, le deuxième microcontrôleur étant configuré pour analyser des données provenant du premier microcontrôleur afin de détecter un défaut électrique de la ligne d'alimentation,
- un troisième microcontrôleur alimenté par ladite ligne d'alimentation et connecté de manière à recevoir des données des premier et deuxièmes microcontrôleurs, le troisième microcontrôleur étant configuré pour signaler la cause de déclenchement du disjoncteur, le troisième microcontrôleur présentant une deuxième valeur de consommation électrique inférieure à la première valeur de consommation électrique,
- une source d'alimentation secondaire configurée pour alimenter le troisième microcontrôleur en cas d'indisponibilité de la ligne d'alimentation.

### Description sommaire des dessins

D'autres avantages et caractéristiques ressortiront plus clairement de la description qui va suivre de modes particuliers de réalisation de l'invention données à titre d'exemples non limitatifs et représentés aux dessins annexés, dans lesquels :
- la figure 1A illustre, de manière schématique, une première réalisation d'un disjoncteur,
- la figure 1B illustre, de manière schématique, une deuxième réalisation d'un disjoncteur,
- la figure 2 illustre un organigramme avec les actions principales menées par le disjoncteur,
- les figures 3A et 3B représentent, de manière schématique, deux modes de réalisation d'un disjoncteur,
- la figure 4 représente un organigramme des étapes pour la gestion de l'état de la batterie,
- la figure 5 représente les instants et les cycles cadençant l'évolution du courant émis par la batterie dans le cadre d'un procédé de gestion de la décharge de la batterie,
- la figure 6 représente des exemples de l'évolution temporelle de la tension électrique mesurée sur les bornes de la batterie.

### Description détaillée

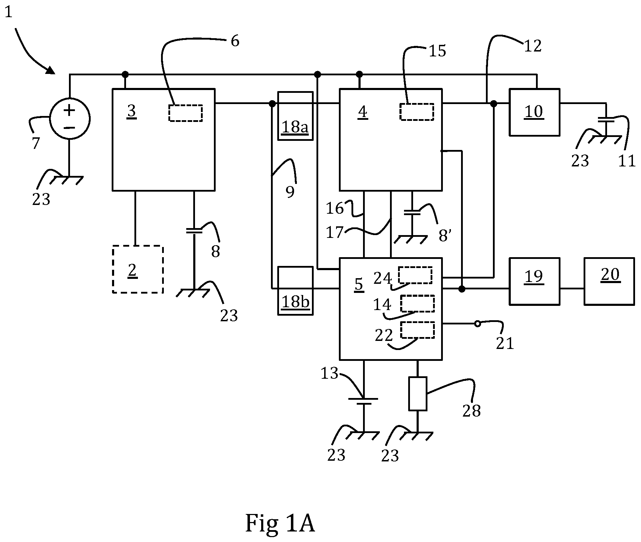

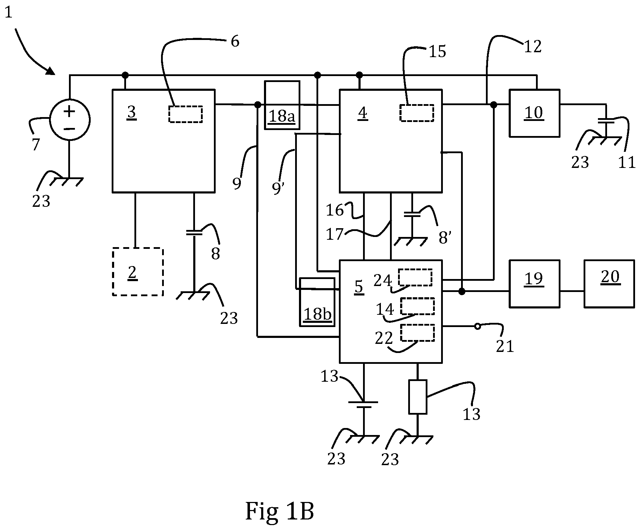

Les figures 1A et 1B montrent un dispositif de surveillance 1 de lignes d'alimentation électrique d'un réseau électrique 2. De manière avantageuse, le dispositif de surveillance 1 fait partie d'un disjoncteur relié à une ou plusieurs lignes d'alimentation électrique du réseau électrique 2. Le dispositif de surveillance analyse ces lignes afin de déterminer si le fonctionnement est normal ou défectueux. Le disjoncteur est configuré pour analyser les caractéristiques électriques de la ligne d'alimentation à surveiller au moyen de microcontrôleurs et pour déclencher la coupure de cette ligne d'alimentation si un défaut électrique est détecté. Le dispositif 1 peut comporter un premier microcontrôleur 3, un deuxième microcontrôleur 4 et un troisième microcontrôleur 5 dont les spécificités seront définies plus tard. En variante, le premier microcontrôleur 3 est disposé hors du dispositif de surveillance 1 mais il est couplé à une série d'entrée du dispositif 1 de manière à lui fournir des informations sur des grandeurs électriques représentatives du réseau électrique 2.

Le premier microcontrôleur 3 est connecté à la ligne d'alimentation du réseau électrique 2. Le premier microcontrôleur 3 est équipé avec des moyens de mesure 6 pour mesurer des grandeurs caractéristique du réseau électrique 2 (étape F1), comme par exemple la tension V, le courant I et la fréquence f. Le premier microcontrôleur 3 peut être intégré dans le disjoncteur ou déporté hors du disjoncteur. Le premier microcontrôleur 3 est également configuré pour surveiller le réseau électrique 2 et détecter un éventuel défaut.

Dans un mode de réalisation avantageux, le premier microcontrôleur 3 est alimenté électriquement par une alimentation primaire 7 qui provient de la ligne électrique à surveiller. Cette alimentation primaire 7 est la source principale d'énergie électrique du premier microcontrôleur 3. Comme l'alimentation du disjoncteur et plus particulièrement du dispositif de surveillance 1 est réalisée par le réseau électrique 2 ou est dérivée de ce réseau 2, en cas de déclenchement du disjoncteur la ligne d'alimentation primaire est coupée et le premier microcontrôleur 3 n'est plus alimenté. Par ailleurs, la puissance délivrée par l'alimentation primaire 7 peut varier en fonction de la charge électrique reliée au réseau électrique.

Une source d'alimentation électrique secondaire est fournie par une première capacité électrique 8, pour alimenter le premier microcontrôleur 3 pendant un temps limité, lorsque son alimentation primaire 7 est interrompue. De cette manière, lorsque l'ordre de déclenchement est envoyé au disjoncteur ou lorsque le premier microcontrôleur 3 détecte la perte de l'alimentation primaire, il reste assez d'énergie dans le condensateur 8 pour assurer le transfert des informations pertinentes aux autres organes du disjoncteur. Cette alimentation secondaire 8 assure l'enregistrement des données électriques importantes lors de la détection d'un éventuel défaut électrique de la ligne d'alimentation.

Le premier microcontrôleur 3 peut détecter un défaut du réseau électrique et déclencher une coupure du réseau électrique. Des informations relatives au réseau électrique 2 et plus particulièrement à la ligne surveillée sont communiquées à différents organes du disjoncteur, par une première ligne de communication 9 depuis le premier microcontrôleur 3.

Dans un mode de réalisation particulier, illustré aux figures 1A et 1B, un deuxième microcontrôleur 4 est relié au premier microcontrôleur 3 au moyen de la première ligne de communication 9. De cette manière, le deuxième microcontrôleur 4 reçoit des informations relatives au réseau électrique 2 par le premier microcontrôleur 3. Le deuxième microcontrôleur 4 peut également recevoir des informations relatives au réseau électrique 2 à partir d'autres dispositifs du dispositif de surveillance. Ces autres dispositifs fournissent des mesures des grandeurs électriques du réseau électrique.

Le deuxième microcontrôleur 4 a pour fonction principale d'analyser et de sauvegarder les informations relatives au réseau électrique 2. Le deuxième microcontrôleur 4 réalise une analyse plus approfondie des grandeurs électriques mesurées ce qui permet de réaliser une étude plus détaillée du réseau électrique (étape F2). Dans cette configuration, le deuxième microcontrôleur 4 peut demander une coupure du réseau d'alimentation pour des problèmes non détectés par le premier microcontrôleur 3, par exemple une baisse de tension en dessous d'un seuil et/ou un changement anormal de la fréquence. Le deuxième microcontrôleur 4 est également configuré pour réaliser des analyses plus précises des caractéristiques électriques de la ligne à surveiller, par exemple une mesure de tension, de fréquence et/ou d'harmoniques et pour transmettre ces informations vers l'utilisateur et/ou vers d'autres modules de calcul.

Pour une analyse approfondie des informations relatives au réseau électrique 2, le deuxième microcontrôleur 4 a besoin d'une quantité d'énergie électrique importante. Cette énergie peut également être utilisée pour transmettre les informations recueillies vers d'autres modules de calcul ou vers l'utilisateur. Pour son alimentation, le deuxième microcontrôleur 4 est relié à l'alimentation primaire 7. De manière avantageuse, le deuxième microcontrôleur 4 est alimenté au moyen d'une alimentation DC/DC qui est elle même alimentée par l'alimentation primaire 7. Comme précédemment, en cas de défaut du réseau électrique ou si l'alimentation primaire 7 ne peut pas fournir la puissance nécessaire, le deuxième microcontrôleur 4 n'est pas en mesure de fonctionner.

Une deuxième source électrique secondaire est fournie par une deuxième capacité 8', pour alimenter le deuxième microcontrôleur 4 pendant un temps limité, lorsque son alimentation primaire 7 est interrompue. De cette manière, lorsque l'ordre de déclenchement du disjoncteur est envoyé ou lorsque le deuxième microcontrôleur 4 détecte la perte de l'alimentation primaire, il reste assez d'énergie dans le condensateur 8' pour transférer les informations pertinentes aux autres organes du disjoncteur.

Le deuxième microcontrôleur 4 est relié à une mémoire 10. La mémoire 10 est avantageusement alimentée au moyen de l'alimentation primaire 7. En cas de défaillance de l'alimentation primaire 7, il est avantageux de relier la mémoire 10 à une source d'alimentation secondaire qui est formée par un condensateur 11 pour fournir de l'énergie électrique pendant un temps limité. De cette manière, les données calculées par le deuxième microcontrôleur 4 peuvent être enregistrées dans la mémoire 10. La mémoire 10 est avantageusement de type mémoire permanente effaçable électriquement et programmable ou encore de type mémoire vive à enregistrement permanent magnétique ou autre ce qui permet d'écrire facilement les informations et de les conserver même après une absence d'alimentation électrique. Un utilisateur peut alors lire les données enregistrées.

Le transfert d'informations entre le deuxième microcontrôleur 4 et la mémoire 10 est réalisé au moyen d'une deuxième ligne de communication 12. Typiquement, les données sauvegardées sont issues de l'analyse des informations relatives au réseau électrique 2. Par exemple, les données concernent une évolution temporelle et/ou des valeurs ponctuelles du courant I, de la tension V ou de la fréquence f d'un courant alternatif, présents dans le réseau électrique 2.

De manière avantageuse, le deuxième microcontrôleur 4 est configuré pour réaliser des calculs d'harmoniques ce qui nécessite l'exécution de calculs de transformées de Fourier très consommateurs en énergie.

Un troisième microcontrôleur 5 est présent et connecté au deuxième microcontrôleur 4 selon un protocole autorisant un transfert de données dans les deux sens. Pour son alimentation, le troisième microcontrôleur 5 est relié à l'alimentation primaire 7. De manière avantageuse, le troisième microcontrôleur 5 est connecté sur la même alimentation que le deuxième microcontrôleur 4, par exemple au moyen du convertisseur DC/DC.

Avantageusement, le troisième microcontrôleur 5 est associé à une alimentation électrique secondaire 13, qui est une source indépendante du réseau électrique 2. A titre d'exemple, cette source d'énergie peut être une batterie 13. La batterie 13 est un dispositif électrochimique qui convertit l'énergie chimique en énergie électrique grâce à une réaction chimique d'oxydo-réduction. La batterie 13 peut être non rechargeable et porter le nom de pile ou pile électrique. La batterie est avantageuse par rapport à un condensateur car elle est plus facilement remplaçable en cas de défaillance.

En cas d'indisponibilité de l'alimentation primaire 7, le troisième microcontrôleur 5 est alimenté par la batterie 13. La batterie 13 est configurée avec le troisième microcontrôleur 5 de manière à ce que le troisième microcontrôleur 5 soit alimenté plus longtemps que les premier et deuxième microcontrôleurs en cas de d'indisponibilité de l'alimentation primaire. De préférence, la batterie 13 est configurée avec le troisième microcontrôleur 5 pour fournir une alimentation permanente de troisième microcontrôleur 5. Par alimentation permanente, on entend assurer l'alimentation du troisième microcontrôleur 5 sur une durée nettement supérieure à la durée d'une intervention de maintenance de sorte que l'alimentation primaire soit rétablie avant l'épuisement de la batterie. Pour obtenir un tel résultat, le troisième microcontrôleur 5 présente des fonctionnalités réduites et peu consommatrices d'énergie. Le troisième microcontrôleur 5 présente des fonctionnalités de présentation de l'information calculée dans le premier et/ou le deuxième microcontrôleurs. Le troisième microcontrôleur 5 présente une consommation électrique qui est inférieure à la consommation électrique du deuxième microcontrôleur 4. Par exemple, le troisième microcontrôleur 5 est dépourvu de moyens de calcul de transformées de Fourrier. Il en résulte que le deuxième microcontrôleur présente une consommation électrique supérieure à la consommation électrique du troisième microcontrôleur.

Une telle configuration permet de dédier le deuxième microcontrôleur 4 à des opérations très consommatrices en énergie afin de réaliser une analyse fine du réseau électrique à partir des informations fournies par le premier microcontrôleur 3 et/ou par d'autres dispositifs fournissant des mesures de grandeurs électriques du réseau électrique 2 et aussi avantageusement d'assurer la transmission de tout ou partie de ces informations vers l'utilisateur ou d'autres organes du disjoncteur.

Le troisième microcontrôleur 5 est dédié à des opérations de communication des informations sur les causes de déclenchement notamment avec l'utilisateur ce qui demande moins d'énergie. Avantageusement, le troisième microcontrôleur assure l'affichage des causes de déclenchement. Après le déclenchement du disjoncteur, il n'est plus nécessaire d'analyser le réseau électrique qui est coupé, il est cependant important de connaître les raisons qui ont provoqué le déclenchement et donc l'arrêt de l'alimentation par le réseau. Il n'est donc pas nécessaire de maintenir le fonctionnement du deuxième microcontrôleur 4 et au contraire il est important d'alimenter le troisième microcontrôleur 5 pour recueillir et mettre à disposition les informations disponibles.

La dissociation des fonctionnalités entre deux microcontrôleurs ayant des consommations électriques différentes permet de réaliser toutes les fonctions attendues lorsque l'alimentation primaire est présente et d'assurer la fourniture des informations pertinentes après coupure sur une période de temps qui peut être longue. Cette particularité permet également de fournir un dispositif compact et robuste car il n'est plus nécessaire de fournir une alimentation secondaire qui alimente tous les composants du disjoncteur.

Les condensateurs 8 et 8' assurent, pendant un court laps de temps, l'alimentation des premier et deuxième microcontrôleurs 3 et 4 de manière à pouvoir enregistrer les caractéristiques électriques du réseau avant et juste après la coupure. Ces informations sont enregistrées dans la mémoire 10. Comme la mémoire 10 est également alimentée par une source d'alimentation secondaire 11 de type condensateur, le troisième microcontrôleur 5 est en mesure de récupérer ces informations.

Comme les microcontrôleurs sont alimentés par l'alimentation primaire 7, il se peut que cette dernière ne puisse délivrer une puissance nécessaire au bon fonctionnement du deuxième microcontrôleur 4. Ce cas de figure peut arriver quand la ligne électrique est peu chargée ou si un défaut de terre se produit. Si un défaut est détecté par le premier microcontrôleur 3, ce dernier prévient le troisième microcontrôleur 5 et les informations sont enregistrées sans que le deuxième microcontrôleur 4 n'intervienne dans le cas où une ligne de communication directe existe entre le premier microcontrôleur 3 et le troisième microcontrôleur 5.

Avantageusement, le troisième microcontrôleur 5 possède des premiers moyens d'analyse 14 configurés pour analyser des caractéristiques du réseau électrique et avantageusement pour analyser des forts courants I et des fortes tensions V du réseau électrique 2. Ces données sont facilement calculables et les calculs sont peu consommateurs d'énergie. Le troisième microcontrôleur 5 peut éventuellement être utilisé pour détecter une anomalie dans le réseau électrique (étape F3).

Avantageusement, le deuxième microcontrôleur 4, possède pour sa part des deuxièmes moyens d'analyse 15 configurés pour analyser uniquement des faibles ou forts courants I et des fortes tensions V qui sont présents sur le réseau électrique 2. Préférentiellement, les analyses réalisées par le deuxième microcontrôleur 4 proviennent de données fournies par le premier microcontrôleur 3 ou par d'autres dispositifs qui fournissent des mesures sur les grandeurs électriques du réseau électrique 2. Dans ce cas de figure, il n'y a pas de risque de déclenchement pour surtension et le troisième microcontrôleur 5 peut également être configuré pour réaliser les analyses appropriées du réseau. Cette configuration permet d'avoir un disjoncteur qui est fonctionnel sur une plus grande gamme de courant I.

Afin de faciliter la récupération des données dans le troisième microcontrôleur 5, différentes informations sont avantageusement envoyées depuis le deuxième microcontrôleur 4. Le deuxième microcontrôleur 4 envoie des informations sur sa propre présence par l'intermédiaire d'un signal de synchronisation. Ainsi, si le deuxième microcontrôleur 4 n'est plus alimenté, le troisième microcontrôleur 5 détecte cet état par une absence de signal de synchronisation. Le deuxième microcontrôleur 4 envoie également un signal indiquant que l'ordre de coupure du réseau électrique a été initialisé afin de faciliter la récupération des données électriques (étape F5) en initiant la récupération des données au plus tôt.

Dans un mode de réalisation particulier, illustré à la figure 1A, au moins deux lignes de communications sont utilisées. Une première ligne de communication 9 est utilisée entre les trois microcontrôleurs 3, 4 et 5 avantageusement pour le transfert des informations relatives au réseau électrique 2. Deux branches sont montées en dérivation de sorte que les microprocesseurs 4 et 5 reçoivent les mêmes données. Une ligne de synchronisation 16 reliant le deuxième microcontrôleur 4 et le troisième microcontrôleur 5 permet également un échange d'informations. La ligne de synchronisation 16 permet de définir le microcontrôleur en charge de la lecture des informations. De manière avantageuse, tant que le deuxième microcontrôleur 4 est alimenté, il lit et analyse prioritairement ou exclusivement les informations fournies par le premier microcontrôleur 3. Le troisième microcontrôleur 5 peut rester en attente voire en veille car il n'y a pas de déclenchement du disjoncteur. Une ligne d'indication 17 permet d'indiquer la coupure du réseau et la cause détectée par le deuxième microcontrôleur 4 (étapes F5 et F6) par un signal spécifique.

Dans une autre configuration particulière illustrée à la figure 1B, au moins deux lignes distinctes de communication sont utilisées. Une première ligne de communication 9 est utilisée pour le transfert des informations relatives au réseau électrique 2 entre le premier microcontrôleur 3 et le deuxième microcontrôleur 4. Une seconde ligne de communication 9' est utilisée pour le transfert des informations relatives au réseau électrique 2 entre le deuxième microcontrôleur 4 et le troisième microcontrôleur 5. Une ligne de synchronisation 16 reliant le deuxième microcontrôleur 4 et le troisième microcontrôleur 5 permet également un échange d'informations. La ligne de synchronisation 16 permet de définir le microcontrôleur en charge de la lecture des informations comme pour le mode de réalisation précédent. De manière avantageuse, tant que le deuxième microcontrôleur 4 est alimenté, il lit et analyse les informations fournies par le premier microcontrôleur 3. Le troisième microcontrôleur 5 reste en attente voire en veille car il n'y a pas de déclenchement du disjoncteur. La ligne d'indication 17 permet d'indiquer la coupure du réseau et la cause détectée par le deuxième microcontrôleur 4 (étapes F5 et F6) par un signal spécifique.

Dans les deux cas particuliers de réalisation illustrés aux figures 1A et 1B, la ligne d'indication 17 permet au deuxième microcontrôleur 4 de communiquer au troisième microcontrôleur 5, par exemple une information issue de son analyse du réseau électrique 2. De cette manière, le troisième microcontrôleur 5 n'est pas obligé d'analyser en permanence les informations relatives au réseau électrique 2, reçues par la ligne de communication 9 ou 9'. Avantageusement, le troisième microcontrôleur 5 possède un mode de veille, dans lequel il ne consomme pas d'énergie électrique. Ainsi, le dispositif de surveillance 1 permet de fonctionner d'une manière plus efficace en termes d'énergie électrique. Le mode de veille est quitté par le troisième microcontrôleur 5 lorsqu'il reçoit, par exemple un signal de démarrage provenant du premier microcontrôleur 3, ou du deuxième microcontrôleur 4. Par exemple à réception d'un signal indiquant le déclenchement du disjoncteur, le troisième microcontrôleur 5 va récupérer des informations provenant des mémoires (par exemple la mémoire 10) qui sont approvisionnées par le premier et/ou le deuxième microcontrôleurs (étape F7 et F8).

De manière également avantageuse, le troisième microcontrôleur 5 est configuré pour sortir de l'état de veille à défaut de réception d'un signal de synchronisation. Ainsi, si la puissance délivrée par la source principale est insuffisante des informations peuvent être stockées dans les mémoires 10 et 19 même si le deuxième microcontrôleur 4 est inactif.

Dans un mode de réalisation avantageux illustré à la figure 1A, le premier microcontrôleur 3 est connecté aux deuxième et troisième microcontrôleurs 4 et 5 au moyen de deux connexions en dérivation de la ligne 9. De cette manière, les deux microcontrôleurs 4 et 5 reçoivent les mêmes informations provenant du premier microcontrôleur 3.

De manière encore plus avantageuse et illustrée à la figure 1A, le transfert des informations est réalisé par l'intermédiaire d'une mémoire tampon 18. Une première mémoire tampon 18a réalise la connexion entre le premier microcontrôleur 3 et le deuxième microcontrôleur 4 et une deuxième mémoire tampon 18b réalise la connexion entre le premier microcontrôleur 3 et le troisième microcontrôleur 5. Il existe donc une première ligne de communication munie d'une mémoire tampon 18a et qui relie le premier microcontrôleur 3 avec le deuxième microcontrôleur 4. Il existe également une deuxième ligne de communication munie d'une mémoire tampon 18b et qui relie le premier microcontrôleur 3 avec le troisième microcontrôleur 5.

Dans un mode de réalisation avantageux illustré à la figure 1B, le premier microcontrôleur 3 est connecté aux deuxième microcontrôleur 4 puis le deuxième microcontrôleur 4 est connecté au troisième microcontrôleur 5 au moyen de deux connexions distinctes notées respectivement 9 et 9'. De cette manière, le microcontrôleur 5 reçoit les informations provenant du premier microcontrôleur 3 par l'intermédiaire du deuxième microcontrôleur 4.

De manière encore plus avantageuse et illustrée à la figure 1B, le transfert des informations est réalisé par l'intermédiaire d'une mémoire tampon 18. Une première mémoire tampon 18a réalise la connexion entre le premier microcontrôleur 3 et le deuxième microcontrôleur 4 et une deuxième mémoire tampon 18b réalise la connexion entre le deuxième microcontrôleur 4 et le troisième microcontrôleur 5. Il existe donc une première ligne de communication munie d'une mémoire tampon 18a et elle relie le premier microcontrôleur 3 avec le troisième microcontrôleur 5. Il existe également une deuxième ligne de communication munie d'une mémoire tampon 18b et qui relie le deuxième microcontrôleur 4 avec le troisième microcontrôleur 5.

De manière avantageuse dans les modes de réalisation illustrés aux figures 1A et 1B, le deuxième microcontrôleur 4 émet un signal de synchronisation vers le troisième microcontrôleur 5 pour définir la priorité de lecture sur les mémoires tampons 18, 18'.

De manière également avantageuse, le premier microcontrôleur 3 est relié aux deux autres microcontrôleurs 4 et 5 au moyen d'une des lignes de communication 9 et 9' servant à indiquer la transmission d'un défaut dans le réseau électrique ce qui se traduit par une demande de coupure (étapes F4 et F5). L'utilisation d'une de ces lignes de communication permet de sécuriser l'enregistrement des informations sur les causes de la coupure.

Dans un mode de réalisation particulier illustré aux figures 1A et 1B, le troisième microcontrôleur 5 est relié à une deuxième mémoire 19 afin de pouvoir stocker les informations du microcontrôleur 5. De cette manière, une partie des informations est enregistrée deux fois. Il y a redondance entre les mémoires 10 et 19 ce qui permet de retrouver plus facilement des informations en cas en problème touchant à l'intégrité du disjoncteur.

De manière avantageuse, si le troisième microcontrôleur 5 détecte que la mémoire 10 n'est plus alimentée, il enregistre les informations dans une autre mémoire par exemple la mémoire interne du microcontrôleur 5, cependant cette dernière est une mémoire volatile. Il est également possible de stocker ces informations dans la mémoire 19.

Dans un mode de réalisation préférentiel, les premier deuxième et troisième microcontrôleurs ne s'échangent directement pas des données. Les échanges de données sont réalisées au moyen de mémoires qui sont communes à deux microcontrôleurs, par exemple la mémoire 10 et/ou la mémoire 19 ou au moyen de lignes de communication parallèle munies chacune d'une mémoire, par exemple les mémoires tampons 18 de la ligne 9 et/ou de la ligne 9'.

La configuration illustrée à la figure 1A permet avantageusement de ne pas utiliser le troisième microcontrôleur 5 qui peut alors se trouver dans un mode de veille une grande partie du temps de fonctionnement du disjoncteur 1.

Des moyens de transmission 20 sont préférentiellement reliés à la deuxième mémoire 19 et/ou à la mémoire 10, pour réaliser une transmission plus facile des données enregistrées. L'utilisateur peut recevoir et lire les informations relatives au réseau électrique 2 sans utiliser le troisième microcontrôleur 5 ce qui permet de limiter l'énergie consommée. A titre d'exemple, les moyens de transmission 20 transmettent des informations relatives au réseau électrique 2 par une communication en champ proche, ou par une autre communication basée sur des ondes électromagnétiques.

Il est avantageux de coupler le troisième microcontrôleur 5 avec un ou plusieurs dispositifs de signalisation (étape F9) afin de faciliter la lecture des causes ayant provoqué le déclenchement du disjoncteur. Le troisième microcontrôleur 5 possède une sortie de signalisation 21 qui est configurée pour signaler à l'utilisateur une information dérivée des informations relatives au réseau électrique 2. A titre d'exemple, cette signalisation peut se faire, par exemple, par des diodes électroluminescentes qui sont raccordées à la sortie de signalisation 21. Ainsi, en cas de déclenchement, l'utilisateur sait rapidement si le déclenchement du disjoncteur est lié à un problème de surcharge, de surintensité, de fuite à la terre, une surtension ou un autre incident ce qui permet d'orienter rapidement l'utilisateur sur la recherche des causes de l'incident.

De manière avantageuse, le disjoncteur comporte une horloge 22 qui permet de dater les différents événements se produisant. Par exemple, l'enregistrement est associé à une date afin de déterminer l'évolution chronologique des différents paramètres électriques les uns par rapport aux autres.

Dans un mode de réalisation, le premier microcontrôleur 3 est un microcontrôleur du type « Application-Specific Integrated Circuit » qui mesure en permanence le courant I et la tension V du réseau électrique 2. Lorsque qu'il détecte un défaut dans le réseau électrique 2, il le signale au deuxième microcontrôleur 4 et au troisième microcontrôleur 5, et déclenche l'interruption du courant présent dans le réseau électrique 2.

Le fonctionnement du dispositif de surveillance 1 peut être garanti dans deux situations de fonctionnement. Dans la première situation de fonctionnement, le réseau électrique 2 fait circuler beaucoup d'énergie électrique, par exemple un courant de l'ordre ou supérieur à 25% du courant nominal du disjoncteur, ce qui se traduit pour le disjoncteur 1 par la surveillance de grandes valeurs pour le courant I et/ou pour la tension V. Dans cette situation, l'alimentation primaire est suffisante pour alimenter tous les organes du dispositif de gestion 1. Dans ce cas, le deuxième microcontrôleur 4 est capable d'analyser les informations relatives au réseau électrique 2 et il sauvegarde en permanence des informations relatives au réseau 2 dans la mémoire 10 et il peut consulter les informations stockées dans la mémoire 10. Le troisième microcontrôleur 5 peut être dans un mode de veille, car le deuxième microcontrôleur 4 assure l'analyse des informations relatives au réseau électrique 2.

Dans cette situation de fonctionnement, lorsque le premier microcontrôleur 3 détecte un défaut dans le réseau 2, il déclenche la coupure du réseau 2. L'alimentation principale 7 est coupée également car elle est dérivée du réseau électrique 2. Grâce à la première capacité 8, le premier microcontrôleur 3 peut informer le troisième microcontrôleur 5 qui est alimenté par l'alimentation secondaire 13.

A l'aide de l'horloge 22, le troisième microcontrôleur 5 peut dater la coupure initiée par le premier microcontrôleur 3, et sauvegarder la date dans la deuxième mémoire 19. Au moyen de la deuxième ligne de communication 12, le troisième microcontrôleur 5 peut lire les informations relatives à l'analyse du réseau électrique 2 qui ont été écrites par le deuxième microcontrôleur 4 dans la première mémoire 10 avant apparition du défaut dans le réseau 2 et durant l'apparition du défaut dans le réseau. Le troisième microcontrôleur 5 peut transmettre toutes les informations aux moyens de transmission 20 qui peuvent les envoyer à l'utilisateur. Le troisième microcontrôleur 5 peut également envoyer un signal correspondant à la cause du déclenchement par la sortie de signalisation 21 pour informer l'utilisateur, par exemple avec plusieurs diodes électroluminescentes. Ainsi, toutes les informations relatives au réseau 2 sont transmises à l'utilisateur.

Dans un mode de fonctionnement particulier, combinable avec les autres modes de fonctionnement, l'horloge 22 est partagée par le troisième microcontrôleur 5, le deuxième microcontrôleur 4 et le premier microcontrôleur 3. En variante, chaque microcontrôleur peut être associé à une horloge spécifique ou une horloge peut être commune à deux microcontrôleurs.

Dans la deuxième situation de fonctionnement, le réseau électrique 2 fait circuler un courant électrique faible, par exemple inférieur à 20% du courant nominal du disjoncteur. Par conséquent, l'alimentation primaire 7 ne suffit pas pour le fonctionnement du deuxième microcontrôleur 4. Dans ce cas, le premier microcontrôleur 3 envoie les informations relatives au réseau électrique au troisième microcontrôleur 5. Si le premier microcontrôleur 3 détecte un défaut du réseau électrique 2, seulement le troisième microcontrôleur 5 peut analyser la cause du défaut et sauvegarder les informations relatives au réseau 2.

Comme indiqué précédemment, il est avantageux d'avoir un troisième microcontrôleur 5 muni d'un état de veille dans lequel la consommation est extrêmement réduite ou nulle. Comme le troisième microcontrôleur 5 ne sert pas à l'analyse des conditions de fonctionnement de la ligne d'alimentation, il se trouve en veille la majorité du temps.

De manière avantageuse, le troisième microcontrôleur 5 est configuré de manière à sortir d'un état de veille à la réception d'un signal du premier et/ou du deuxième microcontrôleurs indiquant l'activité du réseau électrique 2 ou la détection d'un défaut électrique. Ainsi, dans le fonctionnement normal du disjoncteur pour la surveillance du réseau, le troisième microcontrôleur 5 est en état de veille et lorsqu'une activité ou un défaut électrique est détecté le troisième microcontrôleur 5 est activé afin de récupérer les informations pertinentes avant la coupure définitives des deux autres microcontrôleurs 3 et 4.

Dans les modes de réalisation illustrés aux figures 1A et 1B, les microcontrôleurs et les mémoires sont alimentés entre une même tension de référence 23 qui est ici la terre et une tension dérivée de l'alimentation primaire. En variante, il est possible d'utiliser différentes tensions de référence pour chaque microcontrôleur et/ou pour chaque mémoire.

Dans un mode de réalisation avantageux, il est possible d'activer le troisième microcontrôleur 5 de manière périodique ou sur ordre de l'utilisateur pour réaliser une ou plusieurs autres fonctions.

Dans un mode de réalisation particulièrement avantageux, le dispositif de surveillance 1 comporte un système de gestion de la décharge de la batterie 13. En effet, il a été découvert que dans certains cas, lors de l'actionnement du disjoncteur, la batterie n'est plus assez puissante pour alimenter le troisième microcontrôleur 5.

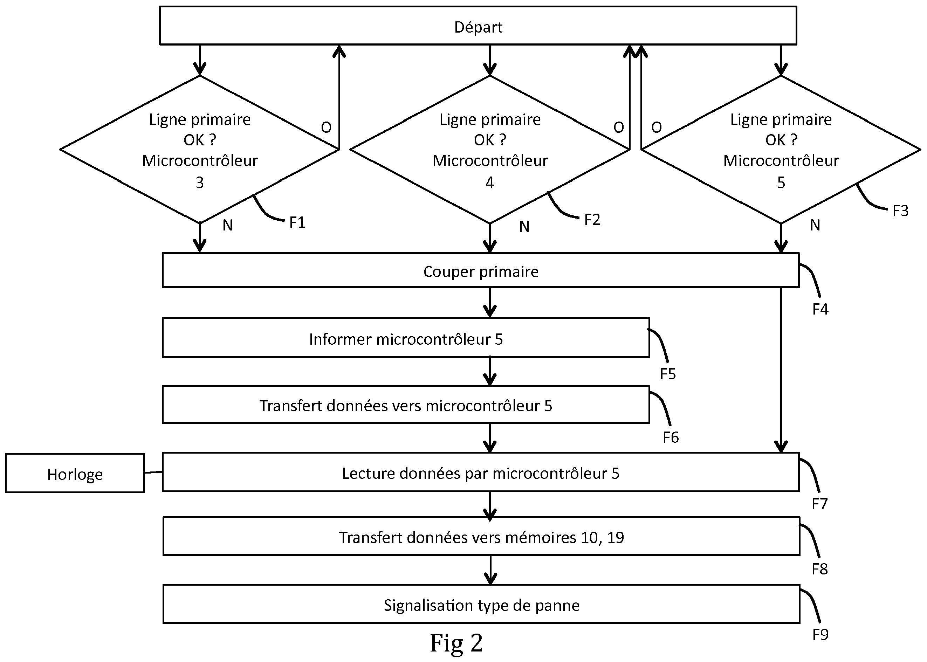

Le fonctionnement décrit précédemment peut être résumé à la figure 2. Les premier et deuxième microcontrôleurs 3 et 4 et éventuellement le troisième microcontrôleur 5 réalisent l'analyse des grandeurs électriques du réseau électrique 2 (étapes F1, F2 et F3). Le réseau électrique est noté « ligne primaire »

Si au moins un des microcontrôleurs détecte une anomalie sur le réseau électrique 2, il envoie un signal qui est, pour un disjoncteur, l'ordre de couper l'alimentation. L'alimentation est coupée dans une étape F4 et donc il en est de même pour l'alimentation primaire du disjoncteur. En même temps ou consécutivement à l'ordre de coupure, une information est transmise par le premier microcontrôleur 3 et/ou par le deuxième microcontrôleur 4 en direction de troisième microcontrôleur 5 afin de l'avertir de la coupure de l'alimentation (étape F6). Comme indiqué précédemment, le troisième microcontrôleur 5 récupère les informations pertinentes sur le réseau électrique (étape F7) depuis les premier et deuxième microcontrôleurs et/ou depuis les mémoires tampons 18 des lignes de communication et/ou depuis les mémoires 10 et 19. Les données recueillies et éventuellement analysées sont transférées dans la mémoire 10 et éventuellement dans la mémoire 19 (étape F8). En plus de l'enregistrement, le dispositif signale le type de panne ayant entrainé la coupure du réseau électrique (étape F9).

Comme indiqué plus haut, dans un mode de réalisation particulièrement avantageux, le dispositif de surveillance comporte un dispositif de gestion de la décharge de la batterie 13. En effet, il a été observé que dans certaines situations, lors du déclenchement du disjoncteur, la batterie 13 n'était pas en mesure d'alimenter le troisième microcontrôleur 5. Dans une configuration standard, le disjoncteur n'est pas fait pour se déclencher régulièrement, et il est rare d'utiliser l'alimentation de secours. Il est donc important que dans cette situation exceptionnelle, le dispositif de surveillance puisse aider l'utilisateur dans la recherche du défaut électrique.

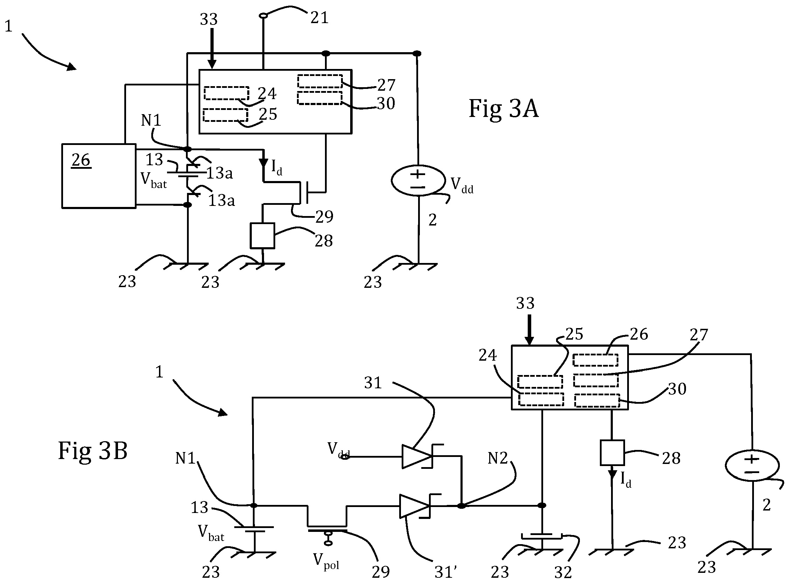

La figure 3a illustre un dispositif de surveillance 1, par exemple un disjoncteur, configuré pour surveiller une ou plusieurs lignes d'alimentation électrique. Le dispositif de surveillance 1 est destiné à être relié aux lignes d'alimentation électrique et configuré pour mesurer les caractéristiques électriques des lignes, par exemple la tension présente sur la ligne et/ou le courant qui circule dans la ligne électrique. Dans le cas d'un disjoncteur, la coupure de la ligne d'alimentation surveillée peut apparaître en cas de détection d'une anomalie.

Le dispositif de surveillance 1 comporte une série de bornes d'alimentation destinées à être connectées à une source d'alimentation primaire 2. La source d'alimentation primaire est la source d'alimentation principale, c'est-à-dire qu'elle alimente majoritairement ou en priorité les différents composants du dispositif de surveillance 1.

Afin de pallier une déficience de la source d'alimentation primaire 2, le dispositif de surveillance 1 comporte une source d'alimentation secondaire 13 qui est formée par une batterie. La batterie 13 comporte deux contacts 13a qui relient la batterie 13 aux éléments du dispositif de surveillance 1. De manière avantageuse, tous les circuits électroniques ou une partie seulement des circuits électroniques du dispositif de surveillance 1 sont alimentés par la batterie 13 afin de conserver une autonomie importante en cas de disparition de l'alimentation principale 2. De manière avantageuse, la batterie 13 alimente au moins un circuit de mémorisation 24 qui enregistre des indicateurs liés aux grandeurs électriques mesurées. Dans le cas d'un disjoncteur, le circuit de mémorisation 24 enregistre préférentiellement des indicateurs liés aux causes de déclenchement du disjoncteur.

La source d'alimentation secondaire 13 est placée dans le dispositif de surveillance 1 de manière à éviter la mise en place d'une nouvelle série de lignes d'alimentation dissociées de la première série de lignes d'alimentation. De cette manière, il est possible d'avoir un dispositif de surveillance 1 qui est compact et qui assure un fonctionnement quasi-permanent.

Comme le dispositif de surveillance 1 est placé dans des environnements agressifs, il est avantageux d'avoir une source d'alimentation secondaire 13 qui est également capable de supporter de telles conditions.

Dans un mode de réalisation avantageux, le dispositif de surveillance 1 est configuré de sorte que la source d'alimentation primaire 2 soit la ligne d'alimentation à surveiller ou soit reliée à la ligne d'alimentation à surveiller. La ligne d'alimentation à surveiller est destinée à alimenter une ou plusieurs autres charges électriques. Si le dispositif de surveillance 1 constate une anomalie sur la ligne d'alimentation, il va provoquer la déconnexion de la ligne ce qui va se traduire par la disparition de la source d'alimentation primaire 2.

Ainsi, dans cette configuration, lorsque la ligne d'alimentation à surveiller est arrêtée, l'alimentation principale 2 fait défaut et il faut basculer sur l'alimentation secondaire 13.

Comme représenté à la figure 3A, le dispositif de surveillance 1 comporte un circuit de commande représenté ici par au moins les microcontrôleurs 4 et 5. Ce circuit de commande est configuré pour analyser la ligne d'alimentation à surveiller. Le circuit de mémorisation 24 est couplé au circuit de commande. Dans le mode de réalisation illustré aux figures 3A et 3B, le circuit de mémorisation 24 fait partie du circuit de commande et avantageusement il fait partie du troisième microcontrôleur 5.

La batterie 13 est configurée pour alimenter le circuit de commande ou une partie du circuit de commande (notamment le circuit de mémorisation 24) en cas de défaut de l'alimentation principale 2. La batterie alimente avantageusement le troisième microcontrôleur 5 ce qui permet d'assurer les bonnes performances du dispositif de surveillance 1.

Le dispositif de surveillance 1 comporte encore un circuit de gestion 25 configuré pour analyser l'état de la batterie 13 et détecter une éventuelle défaillance de la batterie 13.

L'utilisation d'un circuit de gestion 25 qui vérifie l'état de la batterie 13 permet de savoir, au cours du temps, si la source d'alimentation secondaire 13 est en mesure d'alimenter le circuit de mémorisation 24 et avantageusement le troisième microcontrôleur 5 et donc d'assurer un bon fonctionnement du dispositif de surveillance 1 lorsque l'alimentation principale fait défaut.

Des moyens de mesure 26 sont configurés pour mesurer la tension V_{bat} aux bornes de la batterie 13. Les moyens de mesure 26 sont reliés à une entrée d'un comparateur 27 pour lui fournir une information relative à l'état de la batterie 13, au moyen de la tension V_{bat}.

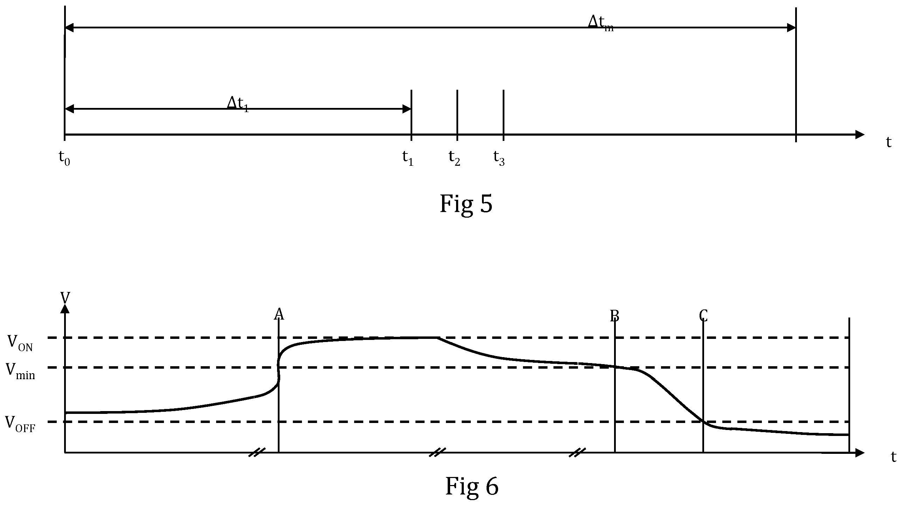

Les moyens de mesure 26 peuvent être configurés pour réaliser la mesure de la tension aux bornes de la batterie 13 de manière périodique, période symbolisée par Δtₘ, sur la figure 5, par exemple au moyen de l'horloge 22. Il est également possible de réaliser la mesure de la batterie 13 à réception d'un signal de mesure. Le terme tension mesurée V_{bat} peut représenter la tension aux bornes de la batterie 13 ou une grandeur représentative de cette tension. Dans un mode de réalisation particulier, la tension aux bornes de la batterie V_{bat} est mesurée toutes les 24h, c'est-à-dire Δtₘ = 24h.

Le comparateur 27 est configuré pour comparer la tension mesurée V_{bat} à un premier seuil V_{OFF} et à un deuxième seuil Vₘᵢₙ. Le deuxième seuil Vₘᵢₙ est supérieur au premier seuil V_{OFF}.

La valeur du deuxième seuil Vₘᵢₙ correspond à une batterie 13 fonctionnelle. Ainsi, si la tension mesurée V_{bat} est supérieure à la deuxième valeur seuil Vₘᵢₙ, le comparateur 27 émet une première information représentative de cette comparaison et la batterie 13 est considérée comme fonctionnelle par le circuit de gestion.

L'intervalle compris entre la première valeur seuil V_{OFF} et la deuxième valeur seuil Vₘᵢₙ correspond à une batterie 13 présentant éventuellement un problème pouvant être corrigé. Ainsi, si la tension mesurée V_{bat} est comprise dans cet intervalle, le comparateur 27 renvoie une deuxième information associée vers le circuit de gestion.

La valeur du premier seuil V_{OFF} correspond à une batterie 13 défectueuse non récupérable. Ainsi, si la tension mesurée V_{bat} est inférieure à la première valeur seuil V_{OFF}, le comparateur 27 émet une troisième information représentative de cette comparaison et la batterie 13 est considérée comme défectueuse. La batterie 13 doit, par exemple, être remplacée.

L'information émise par le comparateur 27 est envoyée au circuit de gestion 25. Si le circuit de gestion 25 reçoit la première information, il peut stocker cette information dans une mémoire.

Si le circuit de gestion 25 reçoit la troisième information, il peut avertir l'utilisateur que la batterie 13 est défectueuse et que son remplacement est à prévoir afin de maintenir le fonctionnement du dispositif de surveillance 1 dans toutes ses performances. La signalisation d'une batterie 13 défaillante peut être réalisée au moyen d'un indicateur lumineux, par exemple au moyen d'une diode électroluminescente. Il est également possible d'utiliser une onde électromagnétique ou un signal électronique pour informer l'utilisateur de la défaillance de la batterie 13. A titre d'exemple, le circuit de gestion 25 indique la fin de vie de la batterie 13 au moyen de la sortie 21 ou d'une autre sortie dédiée.

Si le circuit de gestion 25 reçoit la deuxième information, il engage un protocole de test afin de déterminer si la batterie 13 est fonctionnelle ou défectueuse.

Le circuit de gestion 25 est couplé à une charge électrique 28 configurée pour décharger la batterie 13. Dans ces conditions, un courant électrique circule depuis la batterie 13 vers la charge électrique 28 (à travers les bornes 13a de la batterie 13).

Ainsi, une décharge partielle de la batterie 13 est déclenchée lorsque la tension mesurée V_{bat} aux bornes 3a de la batterie 13 est supérieure au premier seuil V_{OFF} et inférieure au deuxième seuil Vₘᵢₙ.

La décharge de la batterie 13 est déclenchée par le circuit de gestion 25 qui définit les conditions de la décharge, par exemple l'intensité du courant, la durée du courant, la quantité de charges électriques transférée par la batterie 13, la forme du courant dans le temps (intensité en fonction du temps) et/ou le nombre de répétitions d'un courant de décharge définissant un motif.

Un courant de décharge I_{d} est émis depuis la batterie 13, et le courant de décharge I_{d} est configuré pour éliminer au moins partiellement une couche de passivation présente sur une borne ou une des électrodes internes de la batterie 13.

A titre d'exemple, le courant de décharge I_{d} se présente sous la forme de plusieurs impulsions de forme carrée.

Dans un mode de réalisation, le circuit de gestion 25 est relié à l'électrode de commande d'un interrupteur 29. L'interrupteur 29 relie électriquement les deux bornes 13a de la batterie 13 ou il relie une des bornes 13a de la batterie 13 à un potentiel de référence 23 qui est en mesure d'écouler les charges électriques. Ce mode de réalisation est avantageux car il est compact et il permet de commander facilement le passage du courant depuis la batterie 13.

Dans un mode de réalisation encore plus particulier, l'interrupteur 29 est un transistor. Le transistor 29 permet à un courant de décharge I_{d} de transiter depuis l'anode de la batterie 13 vers le potentiel de référence 23 à travers la charge électrique 28. Le potentiel de référence 23 est par exemple la masse. L'utilisation d'un transistor 29 associé à la charge électrique 28 permet de réaliser un dispositif extrêmement compact tout en autorisant un bonne maitrise de la quantité de courant à faire transiter. Le transistor 29 permet de fixer la durée de passage du courant et la charge électrique 28 permet de fixer l'intensité du courant.

Le dispositif de surveillance 1 comporte avantageusement un compteur 30 qui est configuré pour mesurer une grandeur représentative du passage des électrons.

A titre d'exemple, le dispositif de surveillance 1 comporte avantageusement un compteur 30 qui est configuré pour mesurer la quantité de courant traversant les bornes 13a de la batterie 13 ou pour mesurer le nombre d'itérations d'application de courant traversant les bornes 13a de la batterie 13. Le compteur 30 peut être un compteur qui reçoit une information du circuit de gestion 25 indiquant le déclenchement d'un courant de décharge I_{d}. Le compteur 30 enregistre alors le nombre d'itérations d'application du courant de décharge I_{d}. Le compteur 30 peut également être un compteur mesurant l'activation de l'électrode de commande de l'interrupteur 29. Le compteur 30 peut encore être un dispositif de mesure du courant I_{d} circulant à travers la batterie 13. L'information enregistrée est alors une quantité d'électrons ayant transités par les bornes 13a de la batterie 13.

Dans un mode de réalisation particulier, le circuit de gestion 25 est connecté au compteur 30. Le circuit de gestion 25 est configuré pour signaler la défaillance de la batterie 13 si la deuxième information est envoyée par le comparateur 27 et si le compteur 30 présente une valeur supérieure à une valeur critique N_{C}. Dans ces conditions, il a été détecté que la tension V_{bat} aux bornes de la batterie 13 est dans l'intervalle où le protocole de test doit être appliqué et le compteur 30 indique que le protocole de test a déjà été appliqué plusieurs fois. Il semble donc que la chute de tension ne soit pas liée à une couche de passivation ou que le passage d'un courant aux bornes de la batterie 13 ne soit pas suffisant pour casser la couche de passivation. L'émission d'un signal de défaillance permet d'anticiper une aggravation de la situation où la batterie 13 ne sera plus en mesure de fournir une tension suffisante pour alimenter le circuit de commande, le troisième microcontrôleur ou au moins le circuit de mémorisation 24.

Cette configuration permet de détecter plus rapidement une batterie 13 qui ne sera pas fonctionnelle et cela permet de réactiver certaines batteries 13 passivées sans intervention d'un utilisateur.

Dans un mode de réalisation particulier, le circuit de mesure 26 est configuré pour mesurer la tension V_{bat} aux bornes de la batterie 13 dès qu'une batterie 13 vient d'être installée.

Dans ces conditions, une batterie 13 nouvellement placée est automatiquement détectée ce qui permet à l'utilisateur de connaître immédiatement si la nouvelle batterie 13 présente intrinsèquement un problème. On évite ainsi à l'utilisateur qui vient de placer une nouvelle batterie de revenir changer cette batterie qui est défectueuse.

Le circuit de mesure 26, le comparateur 27 et le circuit de gestion 25 peuvent être réalisés par des circuits électroniques distincts ou ils peuvent être au moins partiellement réalisés dans un même circuit électronique par exemple le circuit de commande et notamment par un microcontrôleur.

L'utilisation d'un microcontrôleur pour former au moins une partie du circuit de gestion 25, du circuit de mesure 26, du comparateur 27 et/ou du compteur 30 est avantageuse car cela permet de réaliser un dispositif compact et peu consommateur en énergie.

Dans une configuration particulière représentée à la figure 3b, la source d'alimentation électrique primaire 2 applique une tension d'alimentation V_{dd} au dispositif de surveillance 1 par l'intermédiaire d'une première diode 31. Cette configuration est particulièrement avantageuse lorsque l'alimentation primaire provient de la ligne d'alimentation à surveiller qui est une alimentation en courant alternatif ou continu.

La tension V_{dd} est appliquée à l'anode de la première diode 31. La première diode 31 est agencée pour alimenter le circuit de gestion 25. La cathode de la première diode 31 est ici connectée à l'entrée du troisième microcontrôleur 5.

Dans un mode de réalisation avantageux, la première diode 31 est connectée également à une première borne d'une capacité de découplage 32 configurée pour lisser la tension appliquée par les alimentations. Une deuxième borne de la capacité de découplage 32 est connectée au potentiel de référence 23, ici à la terre. L'alimentation du circuit de gestion 25 par la source primaire 2 permet d'économiser la batterie électrique 13 qui n'intervient qu'en cas de défaut de la source primaire 2.

Il en est avantageusement de même pour les autres éléments servant à suivre l'état de la batterie 13 à savoir le circuit de mesure 26, le compteur 30 et le comparateur 27.

L'anode de la batterie 13 est connectée à la source du transistor 29. Le circuit de gestion 25 applique une tension Vₚₒₗ sur la grille dudit transistor 29, ce qui permet de commander le passage d'un courant depuis la batterie 13 (figure 3b).

Dans l'exemple illustré, le drain du transistor 29 est connecté à l'anode d'une deuxième diode 31'. La cathode de la diode 31' est connectée à l'entrée du circuit de commande et ici plus précisément à l'entrée du troisième microcontrôleur. La connexion électrique entre les deux diodes 31 et 31' avec le condensateur de découplage 32 définit un deuxième noeud N₂. A titre d'exemple, le transistor 29 est un transistor MOSFET de type P.

Dans un mode de réalisation avantageux, la tension d'alimentation V_{dd}, fournie par l'alimentation primaire 2 est d'environ 3,3V avec une tolérance de plus ou moins 5%. La tension électrique V_{bat} de la batterie 13 est d'environ 3,6V pour une batterie 13 pleinement chargée.

Dans un mode de réalisation, le condensateur de découplage 32 est un condensateur ayant une capacité de l'ordre de C_{d}=1µF.

Dans une configuration particulière, la première diode 31 et la deuxième diode 31' sont des diodes Schottky ou silicium ayant une faible tension directe.

Dans un mode de fonctionnement particulier illustré à la figure 3b, le courant de décharge passe au travers du troisième microcontrôleur 5. La charge électrique 28 est connectée entre le troisième microcontrôleur 5 et la tension de référence 23. A titre d'exemple, une résistance électrique de l'ordre de 1kΩ peut être utilisée pour former la charge électrique 28. Dans ce cas, un courant de décharge I_{d} d'environ 3mA est avantageux pour s'assurer de la dégradation de la couche de passivation. Le courant de décharge est avantageusement égal à 3mA, ce qui correspond avec les variations de réalisation à un courant compris entre 2,7 entre 3,3mA.

Dans cette configuration, un premier noeud électrique N₁ est défini par la connexion de l'anode de la batterie 13 avec la borne de la source du transistor 29 et l'entrée d'alimentation du circuit de commande 4. La tension V_{bat} de la batterie 13 peut être mesurée au noeud N₁ par les moyens de mesure 26. Un deuxième noeud électrique N₂ est défini par la connexion de la cathode de la première diode 31 avec la cathode de la deuxième diode 31' et la deuxième entrée du troisième microcontrôleur 5. Une borne du condensateur de découplage 32 est également reliée au noeud N₂.

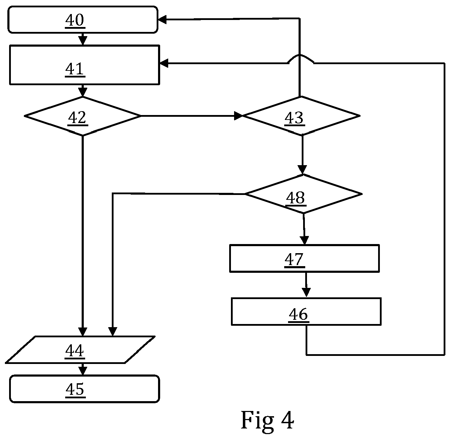

En fonctionnement, le dispositif de surveillance 1 peut appliquer le protocole de suivi de l'état de la batterie 13 qui va suivre et illustré à la figure 4.

Le début du processus est représenté par l'étape 40, la batterie 13 est présente et le dispositif de surveillance 1 est alimenté soit par la batterie 13 soit par la source d'alimentation primaire 2. L'étape 40 peut être considérée comme un état de veille.

Un ordre de mesure est émis pour initier la mesure de la tension V_{bat} aux bornes 13a de la batterie 13. Un courant de décharge I_{d} est alors avantageusement appliqué à la batterie 13 au travers de la charge 28 afin de casser la couche de passivation et d'effectuer les mesures de tension en charge.

A une étape 41, la tension V_{bat} aux bornes de la batterie 13 est mesurée par les moyens de mesure 26. Préférentiellement, la mesure de la tension V_{bat} peut être réalisée par de multiples mesures successives, ce qui permet de calculer par exemple une moyenne de la tension V_{bat}, afin d'obtenir une valeur plus fiable de V_{bat}. Le courant de décharge I_{d} est ensuite interrompu.

A une étape 42-43, la tension V_{bat} mesurée est comparée aux première et deuxième valeurs seuils Vₘᵢₙ et V_{OFF}.

A l'étape 42, la tension V_{bat} mesurée est comparée à la première valeur seuil V_{OFF} (V_{bat}<V_{OFF} ?).

Si la tension V_{bat} est inférieure à la première valeur seuil V_{OFF} (V_{bat}<V_{OFF}), la batterie 13 est considérée comme défaillante (étape 44) et il est avantageux de la remplacer.

Avantageusement, la détection de l'état défaillant est associée à la signalisation de cet état auprès de l'utilisateur (étape 45).

Suite à cet événement de signalisation, le procédé de gestion peut se terminer par une phase d'attente pour le remplacement de la batterie 13. La signalisation peut être réalisée, par exemple, avec un signal avantageusement discret envoyé par la sortie 41 à une diode électroluminescente ou encore un signal numérique ou analogique envoyé à un autre organe du dispositif de surveillance. Dans un mode de réalisation particulier, la valeur de seuil V_{OFF} est égale par exemple à 2.3V.

Si la tension V_{bat}, à l'étape 42, est supérieure à la première valeur de seuil V_{OFF} (V_{bat}>V_{OFF}), la tension V_{bat} mesurée est comparée à la deuxième valeur seuil Vₘᵢₙ. A l'étape 43, la tension V_{bat} mesurée est comparée à la deuxième valeur de seuil Vₘᵢₙ (V_{bat}>Vₘᵢₙ ?).

Si la tension V_{bat} est supérieure à la deuxième valeur de seuil Vₘᵢₙ (V_{bat}>Vₘᵢₙ), la batterie 13 est considérée comme fonctionnelle. Cette information peut être stockée en mémoire.

Le procédé de gestion revient alors vers un état d'attente (étape 40) ou il recommence une étape de mesure de la tension V_{bat} (étape 41). De manière avantageuse, le procédé de suivi retourne à l'état initial 40 et il attend un nouvel ordre de mesure afin d'éviter de trop solliciter la batterie 13.

Si la tension V_{bat} est inférieure à la deuxième valeur de seuil Vₘᵢₙ (V_{bat}<Vₘᵢₙ) cela veut dire que la tension V_{bat} est dans l'intervalle de tension compris entre la première valeur seuil V_{OFF} et la deuxième valeur seuil Vₘᵢₙ. La batterie 13 présente éventuellement un problème pouvant être corrigé.

Un protocole supplémentaire de test de la batterie 13 est engagé (étape 46). Un courant de décharge I_{d} est à nouveau appliqué sur la batterie 13 à travers la charge 28 afin de casser la couche de passivation. De manière avantageuse, avec l'application d'un courant de décharge I_{d}, le compteur 30 est incrémenté afin de connaître le nombre d'occurrences de ce type de problème (étape 47).

Le compteur est configuré pour enregistrer le nombre d'itérations de l'activation du courant de décharge I_{d}. Comme indiqué précédemment, le compteur enregistre une donnée représentative du nombre d'itérations (n). Il est donc possible d'enregistrer un temps, une charge électrique, le nombre d'itérations effectuées ou une autre grandeur.

L'incrémentation du compteur (étape 47) peut être réalisée, avant l'étape 46, pendant l'étape 46 ou après l'étape 46.

Après une certaine durée d'application du courant de décharge I_{d}, la tension V_{bat} aux bornes de la batterie 13 est mesurée encore une fois (étape 41) afin de mesurer l'évolution de la tension V_{bat}.

Comme précédemment, la tension mesurée V_{bat} est comparée aux première et deuxième valeurs de tension (étapes 42 et 43).

Si la tension V_{bat} est supérieure à la deuxième valeur de seuil Vₘᵢₙ (V_{bat}>Vₘᵢₙ), la batterie 13 est considérée comme fonctionnelle. Cette information peut être stockée en mémoire et il est avantageux de réinitialiser le compteur 30.

Si la tension V_{bat} est inférieure à la première valeur de seuil (V_{bat}<V_{OFF}), la batterie 13 est considérée comme défaillante et il est avantageux de la remplacer. Le protocole décrit précédemment peut être appliqué.

Si la tension V_{bat} est dans l'intervalle de tension compris entre la première valeur seuil V_{OFF} et la deuxième valeur seuil Vₘᵢₙ, il est possible de générer une nouvelle fois un courant de décharge I_{d}.

Afin d'éviter la répétition du courant de décharge I_{d} aux bornes de la batterie 13 jusqu'à ce que la tension V_{bat} soit inférieure à la première valeur de seuil V_{OFF}, il est avantageux d'introduire une étape 48 de comparaison de la valeur enregistrée dans le compteur 30 par rapport à une valeur critique N_{C} (n<N_{C} ?). Là encore la position de l'étape 48 par rapport aux étapes 46 et 47 est peu importante.

Une fois la valeur limite N_{C} atteinte, on considère que la batterie 13 ne peut plus être réparée et la batterie est considérée comme défaillante (étape 44). Le protocole de défaillance est avantageusement appliqué afin de prévenir l'utilisateur.

Ainsi, si la tension mesurée V_{bat} est comprise entre les première et deuxième valeurs seuil, il est avantageux de réaliser une comparaison de la valeur du compteur par rapport à une valeur critique (étape 48) afin de déterminer si la batterie 13 est défectueuse ou si un courant de décharge peut améliorer la situation. Ceci constitue un critère supplémentaire permettant de détecter une batterie défaillante.

Les étapes 42 et 43 peuvent être interverties dans la mesure où il est possible de déterminer si la tension V_{bat} est inférieure à la première valeur de seuil V_{OFF}, supérieure à la deuxième valeur de seuil Vₘᵢₙ ou dans l'intervalle indiqué précédemment.

Dans un mode de réalisation avantageux, le protocole de gestion comporte une répétition de certaines étapes de manière périodique afin de suivre l'évolution de l'état de la batterie 13 dans le temps. Avantageusement, la mesure de la tension V_{bat} aux bornes 13a de la batterie 13 est réalisée de manière périodique.

Dans un mode de réalisation avantageux, le protocole de gestion est déclenché lorsqu'une nouvelle batterie 13 est connectée au dispositif de surveillance 1. De cette manière, l'utilisateur sait rapidement si la nouvelle batterie 13 est fonctionnelle ou défaillante.

Il est également possible de forcer le protocole de mesure, par exemple au moyen d'une action de l'utilisateur soit par l'appui sur un bouton poussoir 33 soit par la sollicitation d'une interface de communication.

Dans un mode de fonctionnement particulier, la mesure de la tension V_{bat}, réalisée pendant l'étape 41, peut être décrite schématiquement de la manière représentée à la figure 5. Dans le mode de réalisation illustré à la figure 5, la mesure de la tension est réalisée de manière cyclique. La période est égale au temps Δtₘ.

Si la batterie 3 est considérée comme fonctionnelle, c'est-à-dire si la tension mesurée est supérieure au seuil Vₘᵢₙ, il est avantageux de réaliser la mesure de tension selon une première période Δtₘ₁, par exemple égale à 24h. En revanche, si la batterie 13 est considérée comme potentiellement défaillante, c'est-à-dire si la tension mesurée est inférieure au seuil Vₘᵢₙ mais supérieure au seuil V_{OFF}, il est avantageux de réaliser la mesure de tension selon une deuxième période Δtₘ₂, par exemple égale à 19 minutes.

De manière avantageuse, lorsque la tension aux bornes de la batterie 13 est mesurée à l'intérieur de l'intervalle défini par les tensions Vₘᵢₙ et V_{OFF}, un courant de décharge I_{d} est appliqué et la tension V_{bat} est mesurée après une période prédéfinie d'attente qui fait suite à l'arrêt du courant de décharge I_{d}.

Durant la période Δtₘ₂, une phase de décharge avec un courant égal à I_{d} est appliquée. Cette phase de décharge périodique permet de solliciter les bornes de la batterie pour réduire la formation d'une couche de passivation.

De manière préférentielle, les mesures de tensions sont effectuées après un premier temps d'attente At₁, par exemple au moins égal à 48ms. Ce premier temps d'attente correspond à la durée qui sépare la fin de l'application du courant I_{d} et la première mesure de tension V_{bat}. Le premier temps d'attente permet de fiabiliser la mesure de tension. Il est également possible de mesurer la tension V_{bat} lorsque le courant I_{d} circule. Là encore, il est avantageux de réaliser la mesure de tension en régime stationnaire, par exemple après le premier temps d'attente Δt₁.

Comme indiqué précédemment, pour obtenir une mesure plus juste de la tension V_{bat} aux bornes de la batterie, plusieurs mesures de tensions sont préférentiellement réalisées. Par exemple, trois mesures de tension sont effectuées.

Ces mesures sont réalisées à des instants t₁, t₂ et t₃ sur la figure 5. Les trois mesures peuvent être espacées d'une même période de repos ou il est possible d'appliquer une période de repos différente entre la première et la deuxième mesures et entre la deuxième et la troisième mesures.

Dans un mode de fonctionnement donnant de bons résultats, un temps d'attente au moins égal à 2ms est présent entre deux mesures de tension successives.

Durant la période Δtₘ, il existe une phase de décharge où le courant I_{d} est appliqué et une phase de repos. Durant la phase de repos, un deuxième courant peut être appliqué. Le deuxième courant est inférieur au premier courant I_{d}. Le deuxième courant est avantageusement inférieur à la moitié du premier courant I_{d} (en valeur absolu). Il est également possible d'avoir un deuxième courant nul durant la phase de repos.

En variante, durant la phase de décharge, le courant de décharge I_{d} est un courant périodique avec alternance de périodes de décharge à un premier courant et de périodes de repos à un deuxième courant inférieur au premier courant (en valeur absolu) ou à courant nul.

Par exemple, sur la figure 5, durant la période Δtₘ, il y a une phase de décharge avec un courant égal à I_{d} de t₀ à t₃ et une phase de repos à courant très inférieur à I_{d} de t₃ à la fin de la période Δtₘ.

A titre d'exemple, de bons résultats expérimentaux ont été obtenus avec une période Atₘ égale à 19 secondes et une phase t₀ à t₃, où le courant est égal à I_{d}, égale à 50 millisecondes pour le suivi de la tension V_{bat} et la dépassivation de la batterie.

A titre d'exemple, l'évolution de la tension aux bornes de la batterie est représentée à la figure 6. Jusqu'au moment A, la tension V_{bat} mesurée est comprise entre les tensions V_{OFF} et Vₘᵢₙ. Il existe un doute sur l'état de la batterie qui peut être fonctionnelle mais passivée. Jusqu'au moment A, un courant de décharge est appliqué à partir de la batterie 13.

A partir du moment A et jusqu'au moment B, la tension V_{bat} est supérieure à la tension Vₘᵢₙ et la batterie 13 est considérée comme fonctionnelle. La mesure de la tension V_{bat} est réalisée périodiquement.

A partir du moment B et jusqu'au moment C, la tension V_{bat} est comprise entre la tension Vₘᵢₙ et la tension V_{OFF}. Un courant de décharge est de nouveau appliqué.

A partir du moment C, la tension V_{bat} est inférieure à la tension V_{OFF} et la batterie 13 est considérée comme défaillante.

Ainsi, on fournit un dispositif efficace, simple à réaliser, et particulièrement adapté pour l'état d'une batterie d'alimentation 13 d'un circuit de mémorisation 24.

## Revendications

1. Disjoncteur comportant
- une série d'entrées connectées à un premier microcontrôleur (3) configuré pour mesurer des caractéristiques d'un courant électrique d'une ligne d'alimentation (2) pour détecter un défaut électrique de la ligne d'alimentation (2),
- un deuxième microcontrôleur (4) présentant une première valeur de consommation électrique,
disjoncteur **caractérisé en ce qu'**il comporte
- un troisième microcontrôleur (5) alimenté par ladite ligne d'alimentation et connecté de manière à recevoir des données des premier et deuxièmes microcontrôleurs (3, 4), le troisième microcontrôleur (5) étant configuré pour signaler la cause de déclenchement du disjoncteur (1), le troisième microcontrôleur (5) présentant une deuxième valeur de consommation électrique inférieure à la première valeur de consommation électrique,
- une source d'alimentation secondaire (13) configurée pour alimenter le troisième microcontrôleur (5) en cas d'indisponibilité de la ligne d'alimentation (2),
et **en ce que** le deuxième microcontrôleur (4) est alimenté par ladite ligne d'alimentation et est configuré pour analyser des données provenant du premier microcontrôleur (3) afin de détecter un défaut électrique de la ligne d'alimentation (2).

2. Disjoncteur selon la revendication 1, **caractérisé en ce que** le troisième microcontrôleur (5) est configuré de manière à sortir d'un état de veille à la réception d'un signal du premier et/ou du deuxième microcontrôleur (3, 4) indiquant la détection du défaut électrique de la ligne d'alimentation (2).

3. Disjoncteur selon l'une des revendications 1 et 2, **caractérisé en ce que** :
- le premier microcontrôleur (3) est connecté au deuxième microcontrôleur (4) au moyen d'une première ligne de communication (9) comportant une première mémoire tampon (18a) séparant le premier et le deuxième microcontrôleurs (3, 4),
- le deuxième microcontrôleur (4) est connecté au troisième microcontrôleur (5) au moyen d'une deuxième ligne de communication (9') comportant une deuxième mémoire tampon (18b) séparant le deuxième et le troisième microcontrôleurs (4, 5),
- le deuxième microcontrôleur (4) émet un signal de synchronisation vers le troisième microcontrôleur (5) pour définir la priorité de lecture sur les première et deuxième mémoires tampons (18a, 18b).

4. Disjoncteur selon l'une des revendications 1 et 2, **caractérisé en ce que**
- le premier microcontrôleur (3) est connecté au deuxième microcontrôleur (4) au moyen d'une première ligne de communication (9) comportant une première mémoire tampon (18a),
- le premier microcontrôleur (3) est connecté au troisième microcontrôleurs (5) au moyen d'une deuxième ligne de connexion (9') montée en dérivation de la première ligne de communication (9), la deuxième ligne de connexion (9') comportant une deuxième mémoire tampon (18b),
- un signal de synchronisation est émis par le deuxième microcontrôleur (3) vers le troisième microcontrôleur (4) pour définir la priorité de lecture sur les première et deuxième mémoires tampons (18a, 18b).

5. Disjoncteur selon l'une quelconque des revendications 1 à 4, **caractérisé en ce que** les deuxième et troisième microcontrôleurs (4, 5) sont connectés à une première mémoire (10) et **en ce qu'**un signal de synchronisation est émis par le deuxième microcontrôleur (4) vers le troisième microcontrôleur (5) pour définir la priorité de lecture sur la première mémoire (10).

6. Disjoncteur selon la revendication 5, **caractérisé en ce que** la première mémoire (10) est de type mémoire permanente effaçable électriquement et programmable ou de type mémoire vive à enregistrement permanent magnétique et possède une alimentation secondaire formée par un condensateur.

7. Disjoncteur selon les revendications 2 et 6, **caractérisé en ce que** le troisième microcontrôleur (5) est configuré pour sortir de l'état de veille à défaut de réception d'un signal de synchronisation.

8. Disjoncteur selon l'une quelconque des revendications 1 à 7, **caractérisé en ce que** les deuxième et/ou troisième microcontrôleurs (4, 5) sont reliés à une deuxième mémoire (19), la deuxième mémoire (19) étant reliée à des moyens de communication en champ proche.

9. Disjoncteur selon l'une quelconque des revendications 1 à 8, **caractérisé en ce que** le deuxième microcontrôleur (4) et le premier microcontrôleur (3) possèdent chacun une alimentation secondaire formée par un condensateur (8, 8').

10. Disjoncteur selon l'une quelconque des revendications 1 à 8, **caractérisé en ce qu'**il comporte le premier microcontrôleur (3) alimenté au moyen de ladite ligne d'alimentation (2).

## Patentansprüche

1. Trennschalter, umfassend:
- eine Reihe von Eingängen, die an einen ersten Mikrokontroller (3) angeschlossen sind, der eingerichtet ist, um Merkmale eines elektrischen Stroms einer Versorgungleitung (2) zu messen, um einen elektrischen Fehler der Versorgungsleitung (2) zu erfassen,
- einen zweiten Mikrokontroller (4), der einen ersten Stromverbrauchswert aufweist,
wobei der Trennschalter **dadurch gekennzeichnet ist, dass** er umfasst:
- einen dritten Mikrokontroller (5), der von der Versorgungsleitung versorgt wird und derart angeschlossen ist, dass er Daten von den ersten und zweiten Mikrokontrollern (3, 4) empfängt, wobei der dritte Mikrokontroller (5) eingerichtet ist, um die Auslöseursache des Trennschalters (1) anzuzeigen, wobei der dritte Mikrokontroller (5) einen zweiten Stromverbrauchswert aufweist, der niedriger als der erste Stromverbrauchswert ist,
- eine zweite Versorgungsquelle (13), die eingerichtet ist, um den dritten Mikrokontroller (5) im Falle einer Nichtverfügbarkeit der Versorgungsleitung (2) zu versorgen,
und dass der zweite Mikrokontroller (4) von der Versorgungsleitung versorgt wird und eingerichtet ist, um Daten zu analysieren, die von dem ersten Mikrokontroller (3) kommen, um einen elektrischen Fehler der Versorgungsleitung (2) zu erfassen.

2. Trennschalter nach Anspruch 1, **dadurch gekennzeichnet, dass** der dritte Mikrokontroller (5) eingerichtet ist, um einen Standby-Zustand beim Empfang eines Signals von dem ersten und/oder zweiten Mikrokontroller (3, 4), das die Erfassung eines elektrischen Fehlers der Versorgungsleitung (2) anzeigt, zu verlassen.

3. Trennschalter nach einem der Ansprüche 1 und 2, **dadurch gekennzeichnet, dass**:
- der erste Mikrokontroller (3) an den zweiten Mikrokontroller (4) mit Hilfe einer ersten Verbindungsleitung (9) angeschlossen ist, die einen ersten Pufferspeicher (18a) umfasst, der den ersten und den zweiten Mikrokontroller (3, 4) trennt,
- der zweite Mikrokontroller (4) an den dritten Mikrokontroller (5) mit Hilfe einer zweiten Verbindungsleitung (9') angeschlossen ist, umfassend einen Pufferspeicher (18b), der den zweiten und den dritten Mikrokontroller (4, 5) trennt,
- der zweite Mikrokontroller (4) ein Synchronisationssignal zum dritten Mikrokontroller (5) sendet, um die Lesepriorität an den ersten und zweiten Pufferspeichern (18a, 18b) zu definieren.

4. Trennschalter nach einem der Ansprüche 1 und 2, **dadurch gekennzeichnet, dass**
- der erste Mikrokontroller (3) an den zweiten Mikrokontroller (4) mit Hilfe einer ersten Verbindungsleitung (9), umfassend einen ersten Pufferspeicher (18a), angeschlossen ist.
- der erste Mikrokontroller (3) an den dritten Mikrokontroller (5) mit Hilfe einer zweiten Anschlussleitung (9'), die in Abzweigung zu der ersten Verbindungsleitung (9) montiert ist, angeschlossen ist, wobei die zweite Anschlussleitung (9') einen zweiten Pufferspeicher (18b) umfasst,
- ein Synchronisationssignal von dem zweiten Mikrokontroller (3) zu dem dritten Mikrokontroller (4) gesendet wird, um die Lesepriorität an den ersten und zweiten Pufferspeichern (18a, 18b) zu definieren.

5. Trennschalter nach einem der Ansprüche 1 bis 4, **dadurch gekennzeichnet, dass** die zweiten und dritten Mikrokontroller (4, 5) an einen ersten Speicher (10) angeschlossen sind, und dass ein Synchronisationssignal von dem zweiten Mikrokontroller (4) zum dritten Mikrokontroller (5) gesandt wird, um die Lesepriorität am ersten Speicher (10) zu definieren.

6. Trennschalter nach Anspruch 5, **dadurch gekennzeichnet, dass** der erste Speicher (10) vom Typ elektrisch löschbarer und programmierbarer Permanentspeicher oder vom Typ Arbeitsspeicher mit permanenter Magnetaufzeichnung ist und eine von einem Kondensator gebildete sekundäre Versorgung besitzt.

7. Trennschalter nach den Ansprüchen 2 und 6, **dadurch gekennzeichnet, dass** der dritte Mikrokontroller (5) eingerichtet ist, um den Standby-Zustand bei Nichtempfang eines Synchronisationssignals zu verlassen.

8. Trennschalter nach einem der Ansprüche 1 bis 7, **dadurch gekennzeichnet, dass** die zweiten und/oder dritten Mikrokontroller (4, 5) mit einem zweiten Speicher (19) verbunden sind, wobei der zweite Speicher (19) mit Nahfeldkommunikationsmitteln verbunden ist.

9. Trennschalter nach einem der Ansprüche 1 bis 8, **dadurch gekennzeichnet, dass** der zweite Mikrokontroller (4) und der erste Mikrokontroller (3) jeweils eine von einem Kondensator (8, 8') gebildete sekundäre Versorgung besitzen.

10. Trennschalter nach einem der Ansprüche 1 bis 8, **dadurch gekennzeichnet, dass** er den ersten Mikrokontroller (3) umfasst, der mit Hilfe der Versorgungsleitung (2) versorgt wird.

## Claims

1. A circuit breaker comprising
- a series of inputs connected to a first microcontroller (3) configured to measure characteristics of an electric current of a power supply line (2) to detect an electric fault of the power supply line (2),
- a second microcontroller (4) presenting a first electricity consumption value,
circuit breaker **characterized in that** it comprises:
- a third microcontroller (5) supplied by said power supply line (2) and connected so as to receive data from the first and second microcontrollers (3, 4), the third microcontroller (5) being configured to indicate a cause of tripping of the circuit breaker (1), the third microcontroller (5) presenting a second electricity consumption lower than the first electricity consumption value,
- a back-up power supply source (13) configured to supply the third microcontroller (5) in case of unavailability of the power supply line (2)
and **in that** the second microcontroller (4) is supplied by said power supply line (2) and is being configured to analyse data coming from the first microcontroller (3) in order to detect an electric fault of the power supply line (2).

2. The circuit breaker according to claim 1, **characterized in that** the third microcontroller (5) is configured so as to leave a standby state on receipt of a signal from the first and/or second microcontrollers (3, 4) indicating detection of the electric fault of the power supply line (2).

3. The circuit breaker according to one of claims 1 and 2, **characterized in that**:
- the first microcontroller (3) is connected to the second microcontroller (4) by means of a first communication line (9) comprising a first buffer memory (18a) separating the first and second microcontrollers (3, 4),
- the second microcontroller (4) is connected to the third microcontroller (5) by means of a second communication line (9') comprising a second buffer memory (18b) separating the second and third microcontrollers (4, 5),
- the second microcontroller (4) emits a synchronization signal to the third microcontroller (5) to define a read priority on said first and second buffer memories (18a, 18b).

4. The circuit breaker according to one of claims 1 and 2, **characterized in that**
- the first microcontroller (3) is connected to the second microcontroller (4) by means of a first communication line (9) comprising a first buffer memory (18a),
- the first microcontroller (3) is connected to the third microcontroller (5) by means of a second connection line (9') branch-connected on the first communication line (9), the second connection line (9') comprising a second buffer memory (18b),
- a synchronization signal is emitted by the second microcontroller (3) to the third microcontroller (4) to define the read priority on the first and second buffer memories (18a, 18b).

5. The circuit breaker according to any one of claims 1 to 3, **characterized in that** the second and third microcontrollers (4, 5) are connected to a first memory (10) and **in that** a synchronization signal is emitted by the second microcontroller (4) to the third microcontroller (5) to define a read priority on said first memory (10).

6. The circuit breaker according to claim 5, **characterized in that** the **first** memory (10) is of electrically erasable and programmable non-volatile memory type or of random access memory with permanent magnetic recording type and has a back-up power supply formed by a capacitor.

7. The circuit breaker according to claims 2 and 6, **characterized in that** the third microcontroller (5) is configured to leave a standby state when failing receipt of a synchronization signal.

8. The circuit breaker according to any one of claims 1 to 7, **characterized in that** the second and/or third microcontrollers (4, 5) are connected to a second memory (19), the second memory (19) being connected to near field communication means.

9. The circuit breaker according to any one of claims 1 to 8, **characterized in that** the second microcontroller (4) and the first microcontroller (3) each have a back-up power supply formed by a capacitor (8, 8').

10. The circuit breaker according to any one of claims 1 to 8, **characterized in that** it comprises the first microcontroller (3) supplied by means of said power supply line (2).
